Europäisches Patentamt

European Patent Office

Office européen des brevets

(11) Veröffentlichungsnummer: **0 322 581**
**A1**

(12) **EUROPÄISCHE PATENTANMELDUNG**

(21) Anmeldenummer: 88119947.5

(51) Int. Cl.⁴: **B65G 53/52**

(22) Anmeldetag: 30.11.88

(30) Priorität: 31.12.87 DE 3744598

(43) Veröffentlichungstag der Anmeldung:
05.07.89 Patentblatt 89/27

(84) Benannte Vertragsstaaten:
AT BE CH ES FR GB IT LI LU NL SE

(71) Anmelder: WILLY SCHOOP GMBH
Adam-Opel-Strasse 61-63
D-6090 Rüsselsheim(DE)

(72) Erfinder: Rösler, Klaus-Peter
Lerchenweg 8
D-6087 Büttelhorn 2(DE)

(74) Vertreter: Jochem, Bernd, Dipl.-Wirtsch.-Ing.
et al
Patentanwälte Beyer & Jochem Postfach 17
01 45
D-6000 Frankfurt/Main(DE)

(54) Verfahren und Vorrichtung zur Beseitigung von Verstopfungen in einer Förderleitung.

(57) Die Erfindung betrifft ein Verfahren zur Beseitigung von Verstopfungen in einer zum Transport von Mörtel und mörtelähnlichen Materialien im trockenem und erdfeuchtem Zustand von einem Druckgefäß zu einem Verbraucher mittels eines gasförmigen Förderfluids dienenden Förderleitung, insbesondere in einem Leitungsabschnitt zwischen dem Druckgefäß und einer Zuführung für das gasförmige Förderfluid sowie einer Vorrichtung zur Durchführung des Verfahrens. Die Erfindung ist dadurch gekennzeichnet, daß in der Förderleitung in Förderrichtung an einer Stelle nach der Zuführung für das gasförmige Förderfluid ein Ventil geschlossen und in dem in Förderrichtung vor diesem Ventil liegenden Leitungsabschnitt ein Druckfluid eingeleitet wird, welches das die Verstopfung bildende Material in dem Druckbehälter zurückfördert. Die Vorrichtung ist durch ein in die Förderleitung (12) nach der Zuführung (14) für das gasförmige Förderfluid einzusetzendes Ventil (20) und einen in Förderrichtung vor dem Ventil (20) liegenden Anschluß (22) für das gasförmige Druckfluid gekennzeichnet.

Fig. 1a

## Verfahren und Vorrichtung zur Beseitigung von Verstopfungen in einer Förderleitung

Die Erfindung betrifft ein Verfahren zur Beseitigung von Verstopfungen in einer zum Transport von Mörtel und mörtelähnlichen Materialien in trokkenem oder erdfeuchtem Zustand von einem Druckgefäß zu einem Verbraucher mittels eines gasförmigen Förderfluids dienenden Förderleitung, insbesondere in einem Leitungsabschnitt zwischen dem Druckgefäß und einer Zuführung für das gasförmige Förderfluid, sowie eine Vorrichtung zur Durchführung des Verfahrens.

Anlagen zur Förderung von Mörtel oder mörtelähnlichen Materialien mittels eines gasförmigen Förderfluids sind seit langem bekannt. Sind den darin geförderten Materialien Additive beigegeben, die beispielsweise ein schnelleres Aushärten bewirken sollen, so ist jede auch noch so kurze Unterbrechung des Fördervorganges zu vermeiden. Geschieht dies doch, so wird die Förderleitung durch den in ihr verbleibenden Rest des Materials in nur kurzer Zeit verstopft. Besonders der Leitungsabschnitt zwischen Druckbehälter und Anschluß für die Leitung des gasförmigen Förderfluids ist hiervon betroffen, da bei einer Unterbrechung des Fördervorganges das dort gerade befindliche Material nicht noch durch den abfallenden Förderdruck zu dem Verbraucher gefördert werden kann.

Bisher werden derartige Verstopfungen entweder dadurch beseitigt, daß von außen gegen die Wand des verstopften Leitungsabschnittes geschlagen oder aber die Förderleitung in diesem Bereich zerlegt wird. Die erste Variante stellt ein sehr unsicheres und die Leitung schädigendes Verfahren dar. Die andere Möglichkeit ist dagegen sehr zeitaufwendig, so daß die Gefahr besteht, daß auch das in dem Druckbehälter befindliche Material aushärtet.

Es ist Aufgabe der Erfindung, ein Verfahren und eine Vorrichtung zur Durchführung des Verfahrens zu schaffen, die eine Beseitigung von Verstopfungen auf eine zuverlässige, einfache und zeitsparende Art und Weise ermöglichen.

Vorstehende Aufgabe wird verfahrensgemäß dadurch gelöst, daß in der Förderleitung in Förderrichtung an einer Stelle nach der Zuführung für das gasförmige Förderfluid ein Ventil geschlossen und in dem in Förderrichtung vor diesem Ventil liegenden Leitungsabschnitt ein Druckfluid eingeleitet wird, welches das die Verstopfung bildende Material in dem Druckbehälter zurückfördert.

Das vorgeschlagene Verfahren ermöglicht die Beseitigung einer Verstopfung in dem Leitungsabschnitt zwischen Druckbehälter und Anschluß für die Leitung des Förderfluids auf eine zuverlässige und einfache Art, ohne daß die Förderleitung zerlegt oder beschädigt wird. Es kann deshalb bei jeder noch so kurzen Unterbrechung angewendet werden, so daß während der gesamten Einsatzzeit der Anlage sichergestellt ist, daß es zu keinen Verstopfungen kommt.

Erweist sich die Verstopfung als besonders hartnäckig, so ist es gemäß der vorgeschlagenen Erfindung auch möglich, daß das Druckfluid in Form eines Druckstoßes eingeleitet wird.

Um die für den Aufbau des Druckes durch ein Druckfluid notwendige Einrichtung einzusparen, kann erfindungsgemäß auch vorgesehen werden, daß als Druckfluid für die Beseitigung der Verstopfung das gasförmige Förderfluid verwendet wird.

Eine andere Weiterbildung des Verfahrens besteht darin, daß dem durch das Förderfluid aufgebauten Druck ein weiterer Druck des Druckfluids stoßweise überlagert wird.

Eine Vorrichtung zur Durchführung des Verfahrens ist durch ein in der Förderleitung nach der Zuführung für das gasförmige Förderfluid angeordnetes Ventil und einen in Förderrichtung vor dem Ventil liegenden Anschluß für eine Leitung des Druckfluids gekennzeichnet.

Die Einschaltung des Ventiles in die Förderleitung nach der Zuführung für das Förderfluid ermöglicht auf einfache Art und Weise den Aufbau eines Druckes in dem in Förderrichtung vor dem Ventil liegenden Leitungsabschnitt zur Beseitigung einer dort vorhandenen Verstopfung. Auch gelten hier die gleichen Vorteile wie bei dem Verfahren.

Das Verfahren und ein Ausführungsbeispiel sowie bevorzugte Ausgestaltungen der Erfindung werden nachstehend anhand der Zeichnung erläutert. Es zeigen:

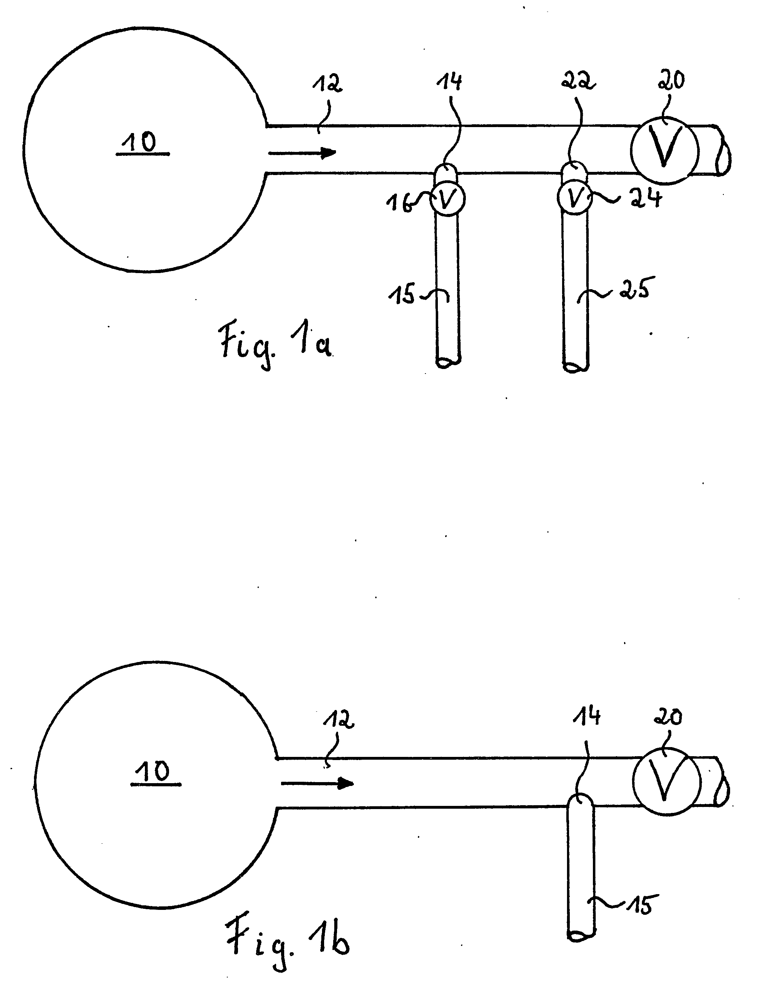

Fig. 1 a eine schematische Darstellung eines Teils einer Vorrichtung zur Versorgung eines nicht gezeigten Verbrauchers mit Mörtel,

Fig. 1 b eine gegenüber Fig. 1a abgewandelte Vorrichtung,

Fig. 2 a einen Ausschnitt aus Fig. 1a in größerem Maßstab,

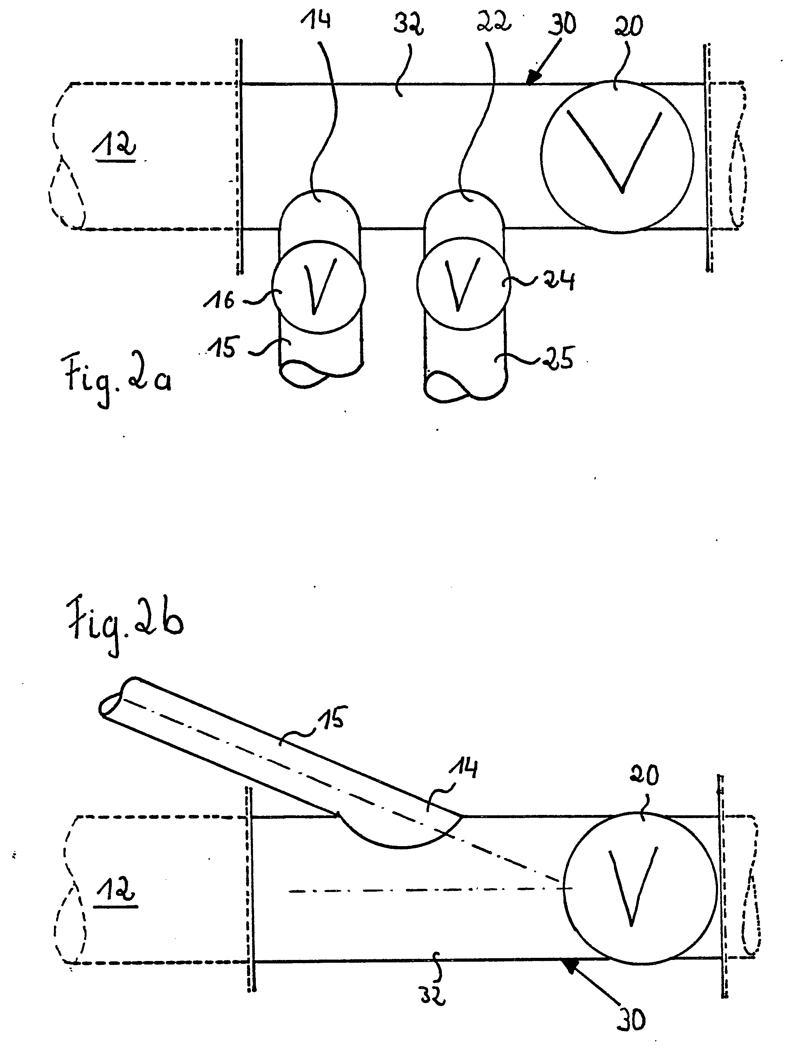

Fig. 2 b einen Ausschnitt aus Fig. 1b in größerem Maßstab mit einer weiteren Abwandlung.

In Fig. 1a ist eine Anlage gezeigt, die aus einem für die Aufnahme und das Mischen des Mörtels oder mörtelähnlicher Materialien dienenden Druckbehälter 10, einer Förderleitung 12, in der das Material in Richtung des angegebenen Pfeiles zu einem nichtgezeigten Verbraucher gefördert wird, und einem Anschluß 14 für eine Förderleitung 15 eines zum Transport für das Material dienenden gasförmigen Förderfluids besteht. In dem Anschluß 14 ist in unmittelbarer Nähe zu der Förderleitung 12 ein Ventil 16 vorgesehen. Dieses Ventil 16 soll verhindern, daß Teile des in Förderrichtung nach dem Anschluß 14 die Verstopfung bildenden Materials in die Leitung 15 für das gasförmige Förderfluid eindringen können, wenn eine Verstopfung beseitigt wird. In der Förderleitung 12 ist in Förderrichtung nach dem Anschluß 14 für das gasförmige Förderfluid ein die Förderleitung 12 absperrendes Ventil 20 angebracht. Vor dem Ventil 20 ist in Förderrichtung ein Anschluß 22 für eine Leitung 25 eines gasförmigen Druckfluids in der Förderleitung 12 angeordnet. In dem Anschluß 22 für die Leitung 25 des Druckfluids befindet sich ebenfalls ein Ventil 24, um während des normalen Förderbetriebs zu verhindern, daß in die Leitung 25 Material eindringt. Für die Ventile 16, 20, 24 kann jede bekannte Ventilkonstruktion vorgesehen werden. Auch ist es möglich, statt eines Ventils einen Schieber oder einen Hahn vorzusehen. Das gasförmige Druckfluid kann von der gleichen Art sein wie das gasförmige Förderfluid. In diesem Fall ist es möglich, für beide die gleiche, nicht gezeigte Druckquelle zu verwenden. Ist jedoch das Druckfluid von dem Förderfluid verschieden, so sind verschiedene, ebenfalls nicht gezeigte Druckquellen vorzusehen.

Soll der Fördervorgang unterbrochen werden, so wird der Druckbehälter 10 von dem Druck entlastet, der das Material bis dahin zu dem Anschluß 14 für das Förderfluid fördert. Anschließend wird nach Schließung des Ventils 16 das Ventil 20 in der Förderleitung 12 ebenfalls geschlossen. Durch den bei der Schließung des Ventils 16 abfallenden Förderdruck wird das Material, welches sich in Förderrichtung hinter dem Anschluß 14 für die Leitung 15 des Förderfluids befindet, noch zu dem Verbraucher gefördert. Anschließend wird das Ventil 24 in dem Anschluß 22 für die Leitung 25 des gasförmigen Druckfluids geöffnet, so daß sich ein Druck zwischen dem geschlossenen Ventils 20 und der Verstopfung in der Förderleitung 12 aufbaut. Der Aufbau dieses Druckes kann dabei langsam bis zu einem in Abhängigkeit von der Förderleitung 12 zulässigen Höchstwert erfolgen. Dieser Druck in der Förderleitung 12 wird dann solange aufrechterhalten, bis die Verstopfung beseitigt und das die Verstopfung bildende Material in den Druckbehälter 10 durch den Druck zurückgefördert worden ist. Es besteht aber auch die Möglichkeit, daß der Druckaufbau plötzlich und stoßweise erfolgt. Dabei kann der stoßweise Aufbau des Druckfluids durch schnelles Öffnen und Schließen des Ventils 24 erfolgen oder aber durch ein entsprechendes Steuern der Druckquelle des Druckfluids. Hierdurch wird ein zusätzlicher Effekt zur Beseitigung der Verstopfung erreicht.

Selbstverständlich können die beiden vorstehenden Verfahrensvarianten miteinander kombiniert werden. Beispielsweise dadurch, daß zunächst der Druck langsam in der Förderleitung 12 aufgebaut wird und, falls dann noch nicht die Verstopfung beseitigt worden ist, der bestehende Druck stoßweise erhöht wird. Dies wird solange wiederholt, bis die Verstopfung beseitigt worden ist. Anschließend kann dann die Förderleitung 12 noch einmal durchgeblasen werden, um eventuell verbleibende Reste der Verstopfung zu beseitigen und in den Druckbehälter 10 zurückzufördern.

Es kann aber auch vorgesehen werden, daß nach der Schliessung des die Förderleitung 12 absperrenden Ventils 20 das Ventil 16 in dem Anschluß 14 geöffnet und in der Förderleitung 12 mittels des Förderfluids ein gleichbleibender Druck aufgebaut wird. Diesem Druck wird dann ein höherer Druck mittels des Druckfluids stoßweise überlagert, um so eine besonders hartnäckige Verstopfung zu beseitigen und in den Druckbehälter 10 zurück zu fördern. Als Variante hierzu kann vorgesehen werden, daß auf das Ventil 16 in dem Anschluß 14 für die Leitung 15 des Förderfluids verzichtet wird. Dies hat den Vorteil, daß bis zur vollständigen Schließung des Ventils 20 noch der Förderdruck in der Förderleitung 12 bis zu dem Verbraucher anliegt. Mate rial, welches sich zwischen dem Anschluß 14 für die Leitung 15 des Förderfluids und dem Verbraucher befindet, wird hierdurch noch bis zu dem Verbraucher gefördert. Unmittelbar nach dem Schließen des Ventils 20 kehrt sich die Förderrichtung um und der Druck des Förderfluids wirkt auf die Verstopfung ein. Anschließend kann der höhere Druck des Druckfluids stoßweise überlagert werden. Um bei der Überlagerung die Druckquelle des Förderfluids nicht zu schädigen, kann in der Leitung 15 eine nicht gezeigte Rückschlagklappe vorgesehen werden.

Nach Beseitigung der Verstopfung kann in jedem der beschriebenen Verfahrensarten die Förderung wieder aufgenommen werden. Ist das Ventil 16 im Anschluß 14 vorhanden, so erfolgt dies dadurch, daß dieses Ventil sowie das Ventil 24 im Anschluß 22 geschlossen wird. Sodann wird das die Förderleitung 14 absperrende Ventil 20 geöffnet. Durch Öffnen des Ventils 16 kann anschließend der normale Förderbetrieb aufgenommen werden. Ist das Ventil 16 in dem Anschluß 14 nicht vorhanden, so wird die Druckquelle des Förderfluids entweder stillgelegt und der Ablauf erfolgt wie oben beschrieben, oder aber der Druck des Förderfluids bleibt in der Förderleitung 12 bestehen. Durch anschließendes Öffnen des Ventils 20 kann dann sogleich ohne Unterbrechung der Förderbetrieb aufgenommen werden.

In Fig. 1b ist eine Variante für die Durchführung des erfindungsgemäßen Verfahrens gezeigt. Die dargestellte Anlage besteht wiederum aus dem Druckbehälter 10, der Förderleitung 12 und dem Anschluß 14 für die Leitung 15 des gasförmigen Förderfluids. Ebenfalls ist in der Förderleitung 12 in Förderrichtung nach dem Anschluß 14 das die Förderleitung 12 absperrende Ventil 20 angeordnet. Dagegen fehlt der Anschluß 22 für das gasförmige Druckfluid sowie das Ventil 16 im Anschluß 14. Die Beseitigung der Verstopfung erfolgt dann dadurch, daß das Ventil 20 unter dem Förder druck des Fördermediums geschlossen wird. Hierdurch kann wiederum Material, welches sich zwischen dem Anschluß 14 und dem Verbraucher befindet, noch beseitigt werden. Nach Schließung des Ventils 20 kehrt sich die Förderrichtung des Druckes des Förderfluids um und wirkt unmittelbar auf die Verstopfung ein. Sobald diese beseitigt ist, können mittels des Förderdruckes noch eventuell vorhandene Materialbestandteile in dem in Förderrichtung vor dem Ventil 20 liegenden Leitungsabschnitt beseitigt werden. Anschließend kann die Druckquelle für das Förderfluid stillgelegt oder aber die Förderung durch Öffnung des Ventils 20 sofort wieder aufgenommen werden. Selbstverständlich ist es aber auch möglich, in dem Anschluß 14 das Ventil 16 vorzusehen. Der Vorgang der Beseitigung der Verstopfung erfolgt dann dadurch, daß zunächst das Ventil 16 im Anschluß 14 geschlossen wird. Daraufhin erfolgt die Schließung des die Förderleitung 12 absperrenden Ventils 20. Durch erneutes Öffnen des Ventils 16 kann dann entweder der Druck in der Förderleitung langsam und/oder aber stoßweise aufgebaut und die Verstopfung in den Druckbehälter 10 zurückgefördert werden. Nach Beseitigung der Verstopfung und "Durchblasen" dieses Förderleitungsabschnittes wird das Ventil 16 wieder geschlossen oder aber die Druckquelle für das Förderfluid stillgelegt. Anschließend wird das Ventil 20 geöffnet, so daß nach nochmaligem Öffnen des Ventils 16 ein normaler Förderbetrieb erfolgen kann.

Die Fig. 2a zeigt ein Ausführungsbeispiel für eine erfindungsgemäße Vorrichtung. Hierbei sind die in den Fig. 1a und 1b gleichfalls vorkommenden Bauteile bzw. Baugruppen mit den gleichen Bezugszeichen versehen. Soweit die Bezugszeichen identisch sind, ist auch ihre Funktion gleich.

Ein dem Innen- und Außendurchmesser der gestrichelt dargestellten Förderleitung 12 angepaßtes Rohrstück 30 ist mit dem Anschluß 14 für die Leitung 15 des gasförmigen För derfluids und mit dem Anschluß 22 für die Leitung 25 des gasförmigen Druckfluids versehen. In beiden Anschlüssen 14, 22 befinden sich in relativer Nähe zu dem die Förderleitung bildenden Rohrabschnitt 32 des Rohrstückes 30 jeweils die Leitungen 15, 25 absperrende Ventile 16, 24. An dem in Förderrichtung hinteren Ende des Rohrstückes 30 ist das die Förderleitung 12 absperrende Ventil 20 angeordnet. Der Anschluß 22 für die Leitung 25 ist dabei relativ nahe an dem mit dem Ventil 20 versehenen Ende des Rohrstückes 30 angeordnet. Hierdurch wird verhindert, daß sich Material, welches sich möglicherweise nach Beendigung des Fördervorganges vor dem Anschluß 22 für das Druckfluid abgelagert hat, durch den Druckaufbau in der Förderleitung 12 unmittelbar vor dem Ventil 20 festsetzt und anschließend nicht mehr beseitigt werden kann. Selbstverständlich gilt dies auch für eine Anordnung mit nur einem einzigen Anschluß 14 für die Leitung 15 des Förderfluids, welches in dem Fall für den Aufbau des die Verstopfung beseitigenden Druckes genutzt wird.

Da die Anbringung eines Anschlusses an eine Förderleitung und eines Ventils in derselben Förderleitung in unmittelbarer Nähe mit hohem konstruktiven Aufwand verbunden ist, wird erfindungsgemäß das in Fig. 2b gezeigte Rohrstück vorgeschlagen. Dort ist der Anschluß 14 für die Leitung 15 des gasförmigen Förderfluids in der Weise an dem die Förderleitung bildenden Rohrabschnitts 32 angebracht, daß die Hauptmittellängsachse des Anschlusses 14 für die Leitung 15 des Förderfluids die Hauptmittellängsachse der Förderleitung 12 in Förderrichtung im spitzen Winkel schneidet. Der Förderstrom des Förderfluids wird hierdurch zunächst gegen das geschlossene Ventil 20 geleitet und dort in Richtung auf den Druckbehälter 10 umgelenkt. Dadurch wird auch Material, das eine Verstopfung unmittelbar vor dem Ventil 20 bildet, beseitigt. Ohne weiteres kann diese Anordnung eines Anschlusses auch in dem Fall verwendet werden, in dem in das Rohrstück 30 jeweils ein Anschluß für das Förderfluid und das Druckfluid mündet. Dabei können beide Anschlüsse 14, 22 in dieser Form angebracht werden, oder aber nur der Anschluß 22 für das Druckfluid.

Die Zusammenfassung des Ventils 20, des Anschlusses 14 für die Leitung 15 des Förderfluids und des Anschlusses 22 für die Leitung 25 des Druckfluids in einem gemeinsamen Rohrstück 30 ist für die Durchführung des Verfahrens nicht zwingend. Selbstverständlich können das Ventil 20 und die oder der Anschluß jeweils voneinander getrennt in der Förderleitung 12 angeordnet werden, insbesondere dann, wenn die Hauptmittellängsachsen der Anschlüsse 14, 22 die Hauptmittellängsachse der Förderleitung 12 im spitzen Winkel schneiden. Die Zusammenfassung der Anschlüsse 14, 22 und des Ventils 20 in einem gemeinsamen Rohrstück 30 hat jedoch den Vorteil, daß bei bestehenden Anlagen durch Einsetzen des Rohrstückes 30 in die Förderleitung 12 die Erfindung ebenfalls angewendet werden kann.

Auch ist für die Funktionsfähigkeit des Verfahrens und der Vorrichtung nicht von Bedeutung, in welchem Abstand von dem Druckbehälter 10 in Förderrichtung die Anschlüsse der Leitungen 15, 25 für das Förder- bzw. Druckfluid sowie das Ventil 20 angeordnet sind. Gleichfalls ist es ohne Bedeutung, von welcher Seite aus die Leitungen 15, 25 in die Förderleitung 12 münden. Schließlich spielt es auch keine Rolle, welche Querschnittsform die Förderleitung 12 aufweist und wie das Rohrstück 30 an der Förderleitung 12 angebracht ist.

Abschließend sei noch darauf hingewiesen, daß das Schliessen und Öffnen der einzelnen Ventile 16, 20, 24 sowie der Aufbau des Druckes zur Beseitigung der Verstopfung und zur Förderung des Materials durch eine entsprechende Steuerung erfolgen können. Dabei ist es möglich vorzusehen, daß nach jeder Unterbrechung des Fördervorganges die Steuerung aktiv wird oder aber nur im Falle einer Verstopfung.

**Ansprüche**

1. Verfahren zur Beseitigung von Verstopfungen in einer zum Transport von Mörtel und mörtelähnlichen Materialien in trockenem oder erdfeuchtem Zustand von einem Druckgefäß zu einem Verbraucher mittels eines gasförmigen Förderfluids dienenden Förderleitung, insbesondere in einem Leitungsabschnitt zwischen dem Druckgefäß und einer Zuführung für das gasförmige Förderfluid, **dadurch gekennziechnet,** daß in der Förderleitung in Förderrichtung an einer Stelle nach der Zuführung für das gasförmige Förderfluid ein Ventil geschlossen und in dem in Förderrichtung vor diesem Ventil liegenden Leitungsabschnitt ein Druckfluid eingeleitet wird, welches das die Verstopfung bildende Material in den Druckbehälter zurückfördert.

2. Verfahren nach Anspruch 1, **dadurch gekennzeichnet,** daß das Druckfluid in Form eines Druckstoßes eingeleitet wird.

3. Verfahren nach Anspruch 1 oder 2, **dadurch gekennzeichnet,** daß als Druckfluid für die Beseitigung der Verstopfung das gasförmige Förderfluid verwendet wird.

4. Verfahren nach Anspruch 3, **dadurch gekennzeichnet,** daß dem durch das Förderfluid aufgebauten Druck ein weiterer Druck des Druckfluids stoßweise überlagert wird.

5. Vorrichtung zum Transport von Mörtel oder mörtelähnlichen Materialien in trockenem oder erdfeuchtem Zustand von einem Druckgefäß über eine Förderleitung zu einem Verbraucher mittels eines gasförmigen Förderfluids, welches in Förderrichtung nach dem Druckgefäß in die Förderleitung eingeleitet wird, **gekennzeichnet durch** ein in der Förderleitung (12) nach der Zuführung (14) für das gasförmige Förderfluid angeordnetes Ventil (20) und einen in Förderrichtung vor dem Ventil (20) liegenden Anschluß (22) für eine Leitung (25) eines gasförmigen Druckfluids.

6. Vorrichtung nach Anspruch 5, **dadurch gekennzeichnet,** daß die Hauptmittellängsachse des Anschlusses (22) für das gasförmige Druckfluid in Förderrichtung einen spitzen Winkel mit der Hauptmittellängsachse der Förderleitung (12) einnimmt.

7. Vorrichtung nach Anspruch 5 oder 6, **dadurch gekennzeichnet,** daß das Ventil (20) und der Anschluß (22) für die Leitung (25) des Druckfluids in einem gemeinsamen Leitungsstück (30) zusammengefaßt sind.

8. Vorrichtung nach Anspruch 7, **dadurch gekennzeichnet,** daß das in die Förderleitung (12) einzusetzende Leitungsstück (30) einen weiteren Anschluß (14) für die Leitung (15) des gasförmigen Förderfluids aufweist.

9. Vorrichtung nach einem der Ansprüche 5 bis 8, **dadurch gekennzeichnet,** daß der Anschluß (22) für die Leitung (25) des Druckfluids mit dem Anschluß (14) für die Leitung (15) des Förderfluids identisch ist.

Fig. 1a

Fig. 1b

Fig. 2a

Fig. 2b

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| | Keine Entgegenhaltungen.<br>----- | | B 65 G 53/52 |
| | | | **RECHERCHIERTE SACHGEBIETE (Int. Cl.4)** |
| | | | B 65 G |

**Der vorliegende Recherchenbericht wurde für alle Patentansprüche erstellt**

| Recherchenort | Abschlußdatum der Recherche | Prüfer |
|---|---|---|
| DEN HAAG | 29-03-1989 | WERNER D.M. |

EPO FORM 1503 03.82 (P0403)